# EUROPÄISCHE PATENTSCHRIFT

(11) **EP 1 857 700 B1**
(45) Veröffentlichungstag und Bekanntmachung des Hinweises auf die Patenterteilung: **14.10.2009**
(21) Anmeldenummer: 07009098.0
(22) Anmeldetag: 05.05.2007
(51) Int. Cl.: F16D 25/10, F16D 25/12

(54) **Kopplungsanordnung**
Clutch assembly
Agencement d'embrayage

(30) Priorität: 18.05.2006 DE 102006023289
(43) Veröffentlichungstag der Anmeldung: 21.11.2007
(73) Patentinhaber: ZF Friedrichshafen AG, 88046 Friedrichshafen (DE)
(72) Erfinder: Sudau, Jörg, 97464 Niederwerrn (DE); Fenn, Peter, 97534 Waigolshausen (DE); Lotze, Rüdiger, 97424 Schweinfurt (DE)

(56) Entgegenhaltungen:
- EP-A- 1 729 025
- EP-A1- 1 541 401
- DE-A1- 10 036 504
- DE-U1- 20 320 467

## Beschreibung

Die Erfindung betrifft eine Kopplungsanordnung gemäß dem Oberbegriff des Anspruches 1.

Eine derartige Kopplungsanordnung ist aus der EP 1 541 401 A1 bekannt. Diese Kopplungsanordnung weist zwei Kupplungsvorrichtungen auf, die mit Radialversatz zueinander angeordnet sind, und über ein Koppelelement miteinander in Wirkverbindung stehen. Das Koppelelement ist bei der bezüglich des Momentenflusses antriebsseitigen ersten Kupplungsvorrichtung, die radial größer als die andere Kupplungsvorrichtung ausgebildet ist, als abtriebsseitiger Kupplungselemententräger wirksam, bei der bezüglich des Momentenflusses abtriebsseitigen zweiten Kupplungsvorrichtung dagegen als antriebsseitiger Kupplungselemententräger. Ein von der Kurbelwelle einer Brennkraftmaschine eingeleitetes Moment wird über einen Torsionsschwingungsdämpfer auf einen Lagerzapfen übertragen, der mit einem antriebsseitigen Kupplungselemententräger der ersten Kupplungsvorrichtung einstückig ist, während ein von einem Rotor einer elektrischen Maschine übertragenes Moment über eine relativ zum antriebsseitigen Kupplungselemententräger der ersten Kupplungsvorrichtung drehbare Umhüllung für beide Kupplungsvorrichtungen auf das Koppelelement übertragen wird.

Durch die erste Kupplungsvorrichtung ist bei in eingerückter Schaltposition befindlichen Kupplungskomponenten eine Wirkverbindung zwischen der elektrischen Maschine und der Brennkraft-Maschine herstellbar, während bei in ausgerückter Schaltposition befindlichen Kupplungskomponenten eine Trennung der beiden Maschinen erfolgt. Im Gegensatz dazu ist durch die zweite Kupplungsvorrichtung bei in eingerückter Schaltposition befindlichen Kupplungskomponenten eine Wirkverbindung zwischen der elektrischen Maschine und/oder der Brennkraft-Maschine mit einem Abtrieb, wie einer Getriebeeingangswelle herstellbar, während bei in ausgerückter Schaltposition befindlichen Kupplungskomponenten eine Trennung der zumindest einen Maschine vom Abtrieb erfolgt.

Die Kupplungskomponenten bestehen bei jeder der beiden Kupplungsvorrichtungen aus zumindst einer Membranfeder, einem Kupplungskolben, einer Mehrzahl von Kupplungselementen und einer Abstützplatte, wobei die Kupplungselemente jeweils in Abhängigkeit von der Position des Kupplungskolbens gegenüber der Abstützplatte entweder durch Reibwirkung eine Momentenübertragung bewirken, oder aber unterbrechen. Die Vorgabe der Position des Kupplungskolbens erfolgt bei beiden Kupplungsvorrichtungen in Abhängigkeit vom Druck in jeweils einem Druckraum gegenüber einem die Kupplungselemente aufnehmenden Kühlraum. Der Auf- oder Abbau des Überdruckes im jeweiligen Druckraum erfolgt jeweils über Ver- und Entsorgungsleitungen, von denen die Versorgungsleitungen an eine Versorgungsquelle und die Entsorgungsleitungen über eine Entsorgungsleitung an eine Fluidbevorratung angeschlossen sein sollten.

Bei der bekannten Kopplungsanordnung wird über eine Versorgungsleitung Fluid zur Kühlung beider Kupplungsvorrichtungen in den Kühlraum eingeleitet, zur Schmierung diverser Lagerstellen dagegen zu denselben geführt. Aufgrund dieser Aufteilung wird der für den Kühlraum verfügbare Volumenstrom an frischem Fliud bereits reduziert. Darüber hinaus wird der für den Kühlraum vorgesehene Volumenstrom beiden Kupplungsvorrichtungen gleichermaßen zugeführt, obwohl in der Offenlegungsschrift in nachvollziehbarer Weise davon ausgegangen wird, dass die erste Kupplungsvorrichtung mehr erhitzt wird als die zweite Kupplungsvorrichtung. Diesem Problem wird lediglich durch die Wirkung der Fliehkraft auf das Fluid Rechnung getragen, indem die erste Kupplungsvorrichtung sich in einem Bad von Fluid befindet, die zweite Kupplungsvorrichtung dagegen lediglich in einem Nebel des gleichen Fluids. Eine individuelle Kühlung jeder einzelnen Kupplungsvorrichtung mit einem hinreichend großen, für die notwendige Wärmeabführung exakt bemessenen Volumenstrom an Fluid ist daher nicht möglich.

Eine weitere Kopplungsanordnung ist aus der DE 100 36 504 A1 bekannt. Diese Kopplungsanordnung weist eine erste Kupplungsvorrichtung auf zur Herstellung einer Wirkverbindung zwischen einer elektrischen Maschine und einer Brennkraft-Maschine bei in eingerückter Schaltposition befindlichen Kupplungskomponenten sowie zur Trennung der beiden Maschinen bei in ausgerückter Schaltposition befindlichen Kupplungskomponenten, und eine zweite Kupplungsvorrichtung zur Herstellung einer Wirkverbindung zwischen zumindest einer der Maschinen und einem Abtrieb, wie einer Getriebeeingangswelle, bei in eingerückter Schaltposition befindlichen Kupplungskomponenten sowie zur Trennung der wenigstens einen Maschine vom Abtrieb bei in ausgerückter Schaltposition befindlichen Kupplungskomponenten.

Die Kupplungskomponenten bestehen bei jeder der beiden Kupplungsvorrichtungen aus einer Membranfeder, einer Anpressplatte, einer Kupplungsscheibe und einer Abstüzplatte, wobei die Kupplungsscheibe jeweils in Abhängigkeit von der Position eines jeweils zugeordneten Ausrückers durch Reibwirkung gegenüber der Anpressplatte zum einen und gegenüber der Abstützplatte zum anderen eine Momentenübertragung bewirkt, oder aber unterbricht. Zumindest bei dem der ersten Kupplungsvorrichtung zugeordneten Ausrücker ist ersichtlich, dass dieser hydraulisch wirksam ist, und dadurch zur Versorgung mit fluidförmigem Medium über wenigstens eine Versorgungsleitung an eine Versorgungsquelle und über zumindest eine Entsorgungsleitung an eine Fluidbevorratung angeschlossen sein muss.

Derartige Kupplungsscheiben müssen, sofern sie hinreichende Drehmomente übertragen sollen, mit sehr großen Durchmessern ausgebildet sein, was entweder die Unterbringung der elektrischen Maschine erschwert, oder aber zu einem von Kraftfahrzeugherstellern zumeist nicht tolerierten Außendurchmesser und Gewicht der gesamten Kopplungsanordnung führt. Des weiteren sind diese Kupplungsscheiben, sofern sie einmal schlupfbedingt erhitzt sind, durch die Umgebungsluft kaum kühlbar, so dass insbesondere bei hohen Anforderungen sehr rasch mit einer Überhitzung von Reibbelägen und dadurch mit einer Schädigung oder gar Zerstörung derselben gerechnet werden muss. Außerdem kann sich die Kombination hydraulischer Ausrücker und trockenlaufender Kupplungsscheiben bei Undichtigkeiten am Ausrücker kritisch bemerkbar machen, da an der Kupplungsscheibe vorgesehene Reibbeläge bei Benetzung mit fluidförmigem Medium ihre Reibeigenschaften rasch verschlechtern.

Der Erfindung liegt die Aufgabe zugrunde, eine mit zumindest zwei Kupplungsvorrichtungen ausgebildete Kopplungsanordnung derart auszubilden, dass jede der Kupplungsvorrichtungen bei geringstmöglichem technologischen Aufwand durch einen für die notwendige Wärmeabführung exakt bemessenen Volumenstrom an Fluid individuell kühlbar ist.

Diese Aufgabe wird durch eine Kopplungsanordnung gemäß dem Anspruch 1 gelöst. Durch Ausbildung beider Kupplungsvorrichtungen der Kupplungsanordnung mit jeweils einem zur Aufnahme wenigstens eines als Kupplungskomponente dienenden Kupplungselementes bestimmten Kühlraums sowie durch Anschluss des Kühlraumes der einen Kupplungsvorrichtung an eine Versorgungsleitung und durch Anschluss des Kühlraumes der anderen Kupplungsvorrichtung an den Kühlraum der erstgenannten Kupplungsvorrichtung wird dafür gesorgt, dass die Kühlräume für eine wirksame Wärmeabführung aus dem Reibbereich der Kupplungselemente jeweils umgehend mit fluidförmigem Medium versorgbar sind.

Diese umgehende Versorgung der Kühlräume mit frischem fluidförmigem Medium erfolgt zugunsten einer einfachen Ausgestaltung der Kopplungsanordnung mit einem Minimum an Versorgungsleitungen, mithin also derjenigen Leitungen, die jeweils an der Versorgungsquelle angeschlossen sind. Eine Begrenzung der Versorgungsleitungen kann insbesondere dadurch erfolgen, dass der Kühlraum einer der beiden Kupplungsvorrichtungen nicht unmittelbar an die Versorgungsquelle angeschlossen ist, sondern in der Art einer Reihenschaltung über eine Verbindungsleitung an den Kühlraum der anderen Kupplungseinrichtung. Verständlicherweise wird der Vorteil für eine derartige Anordnung insbesondere dann voll ausgeschöpft, wenn der Kühlraum der dichter an der Versorgungsquelle positionierten Kupplungsvorrichtung mittels einer Versorgungsleitung unmittelbar mit fluidförmigem Medium versorgt wird, der Kühlraum der weiter entfernt von der Versorgungsquelle positionierten Kupplungsvorrichtung dagegen über den Kühlraum der anderen Kupplungsvorrichtung. Auf diese Weise wird nicht nur die Anzahl der an die Versorgungsquelle angeschlossenen Versorgungsleitungen reduziert, sondern auch deren Erstreckungslänge innerhalb der Kopplungsanordnung. Damit verringert sich nicht nur der konstruktive Aufwand der Fluidführung, sondern auch die strömungswiderstandsbedingten Verluste. Infolge der zuvor genannten Vorzüge kann die Versorgungsquelle mit geringerem Leistungsvermögen ausgebildet sein, und muss demnach lediglich eine geringere Leistung von einer der Maschinen, also der Brennkraftmaschine oder der elektrischen Maschine, abfordern.

Die vorteilhafte Versorgung des Kühlraums einer der Kupplungsvorrichtungen über den Kühlraum der jeweils anderen Kupplungsvorrichtung ist insbesondere bei Kupplungsvorrichtungen von Vorteil, die einerseits mit der Drehzahl des Antriebs um eine zumindest im wesentlichen mit einer Drehachse des Antriebs identische Drehachse rotieren, und von denen andererseits zumindest die der Versorgungsquelle nähere Kupplungsvorrichtung mit dem fluidförmigen Medium zumindest im wesentlichen voll befüllt ist. Gerade dann ist nämlich der Kühlraum der letztgenannten Kupplungsvorrichtung nicht nur intensiv mit frischem fluidförmigem Medium aus der Versorgungsquelle versorgbar, es wird darüber hinaus auch das bereits im Kühlraum befindliche fluidförmige Medium derart intensiv durchmischt, dass es ohne wesentliche Erwärmung in den Kühlraum der anderen Kupplungsvorrichtung gelangt, und somit auch dort seiner Funktion wirksam nachkommen kann.

Eine besonders vorteilhafte Anwendung der erfindungsgemäßen Ausgestaltung der Kopplungsanordnung liegt vor, wenn die Kupplungsvorrichtungen jeweils in Form eines 3-Leitungs-Systems vorliegen. Gerade bei einer derartigen Ausgestaltung der Kupplungsvorrichtungen werden nämlich für jeden Kühlraum jeweils zwei Leitungen benötigt, und zwar eine zum Befüllen des Kühlraumes und eine zum Entleeren desselben, so dass sich die Einsparung einer zur Versorgungsquelle führenden Versorgungsleitung besonders vorteilhaft bemerkbar macht.

Weiterhin kann eine zu einer Fluidbevorratung führende Entsorgungsleitung, insbesondere diejenige an der von der Versorgungsquelle entfernteren Kupplungsvorrichtung, ersatzlos entfallen, wenn der Kühlraum dieser Kupplungsvorrichtung in unmittelbarer Strömungsverbindung mit einem Entsorgungsweg steht, der innerhalb eines die Kupplungsanordnung umschließenden Getriebegehäuses angeordnet ist, und das fluidförmige Medium daher mit Vorzug innerhalb des Getriebegehäuses zur Fluidbevorratung, die üblicherweise mit der Versorgungsquelle in Strömungsverbindung steht, zurückführt.

Bei Ausbildung der Versorgungsleitungen, gegebenenfalls auch einer Entsorgungsleitung, an der zur Versorgungsquelle näheren Kupplungsvorrichtung, im Radialbereich eines Abtriebs oder von denselben umschließenden Naben wird insbesondere dann, wenn der Abtrieb als Getriebeeingangswelle ausgebildet ist, eine Konzentrierung dieser Leitungen auf kleinem Radialabstand von der Drehachse der Kopplungsanordnung erzielt. Dadurch sind fliehkraftbedingte Strömungsbeeinflussungen minimierbar, und zudem ist für eine kompakte Bauweise der Kopplungsanordnung trotz dieser Leitungen gesorgt.

Mit Vorzug erfolgt die Versorgung der beiden Kupplungsvorrichtungen durch eine abtriebsseitig angeordnete Versorgungsquelle. Insofern ergibt es sich, dass die eine Wirkverbindung zwischen einem Antrieb, wie einer Brennkraft-Maschine oder einer elektrischen Maschine und einem Abtrieb, wie einer Getriebeeingangswelle herstellende oder unterbrechende zweite Kupplungsvorrichtung dichter an der Versorgungsquelle angeordnet ist als die eine Wirkverbindung zwischen der Brennkraft-Maschine oder der elektrischen Maschine erzeugende oder aufhebende erste Kupplungsvorrichtung, so dass vorteilhafterweise der Kühlraum der zweiten Kupplungsvorrichtung unmittelbar an die Versorgungsquelle angeschlossen ist, der Kühlraum der ersten Kupplungsvorrichtung dagegen über den Kühlraum der zweiten Kupplungsvorrichtung.

In besonderer Ausgestaltung verfügt die Kupplungsanordnung über ein Koppelelement, das nicht nur den Kühlraum der zweiten Kupplungsvorrichtung von dem Kühlraum der ersten Kupplungsvorrichtung trennt, sondern darüber hinaus auch den Rotor der elektrischen Maschine trägt. Weitere vorteilhafte Ausgestaltungen und Wirkungen des Koppelelementes sind im Einzelnen den Ansprüchen entnehmbar.

Mit Vorzug ist der Kopplungsanordnung ein Torsionsschwingungsdämpfer vorgeschaltet, der über eine die Drehverbindung zur Kopplungsanordnung herstellende Torsionsdämpfer-Nabe verfügt. Insbesondere bei Anbindung dieser Torsionsdämpfer-Nabe an ein Element eines abtriebsseitigen Übertragungselementes des Torsionsschwingungsdämpfers, wie einer Nabenscheibe, mittels axialelastischer Elemente können nicht nur Schwingungen in Drehrichtung, also Torsionsschwingungen, gedämpft werden, sondern darüber hinaus auch Schwingungen in Achsrichtung, also Taumelschwingungen.

Für denjenigen Fall, dass von einer erheblichen Verschmutzung des den Entsorgungsweg passierenden fluidförmigen Mediums mit Schmutzpartikeln, die aus den Kupplungsvorrichtungen stammen, gerechnet werden muss, besteht die Möglichkeit, nicht nur die der Vorratsquelle nähere Kupplungsvorrichtung mit einem Kupplungsgehäuse zu versehen, sondern auch die von der Vorratsquelle entferntere Kupplungsvorrichtung. Aufgrund des der letztgenannten zugeordneten Kupplungsgehäuses kann das im Kühlraum dieser Kupplungsvorrichtung enthaltene fluidförmige Medium allein über zumindest einen Durchlass, mit Vorzug sogar über mehrere Durchlässe, in den Entsorgungsweg übertreten. Vorteilhafterweise wird dieser Durchlass in einem vorbestimmten Radialabstand innerhalb einer radial äußeren Axialgehäusewandung des Kupplungsgehäuses vorgesehen. Aufgrund dieses vorbestimmten Radialabstandes bildet sich aufgrund des höheren spezifischen Gewichtes der Schmutzpartikel gegenüber dem fluidförmigen Medium fliehkraftbedingt radial innerhalb der Axialgehäusewandung ein mit Schmutzpartikeln angereicherter Flüssigkeitssumpf aus, während das sich radial innerhalb dieses Flüssigkeitssumpfes befindende fluidförmige Medium im wesentlichen unbelastet durch Schmutzpartikel in den Entsorgungsweg übertritt. Aufgrund dieser Maßnahme wird vermieden, dass sich die Schmutzpartikel im Radialbereich der elektrischen Maschine und insbesondere hierbei im Spalt zwischen deren Rotor und deren Stator, durch Magnetfelder bedingt, ablagern. Derartige Ablagerungen verringern den Spalt und können bei Relativbewegungen des Rotors gegenüber dem Stator zu einer Schädigung oder gar Zerstörung der elektrischen Maschine führen.

Die vorliegende Erfindung ist anhand eines Ausführungsbeispieles näher erläutert. Es zeigt:
- Fig.: 1 einen Querschnitt durch eine Kopplungsanordnung mit zwei Kupplungsvorrichtungen, von denen eine über ein Kupplungsgehäuse verfügt,

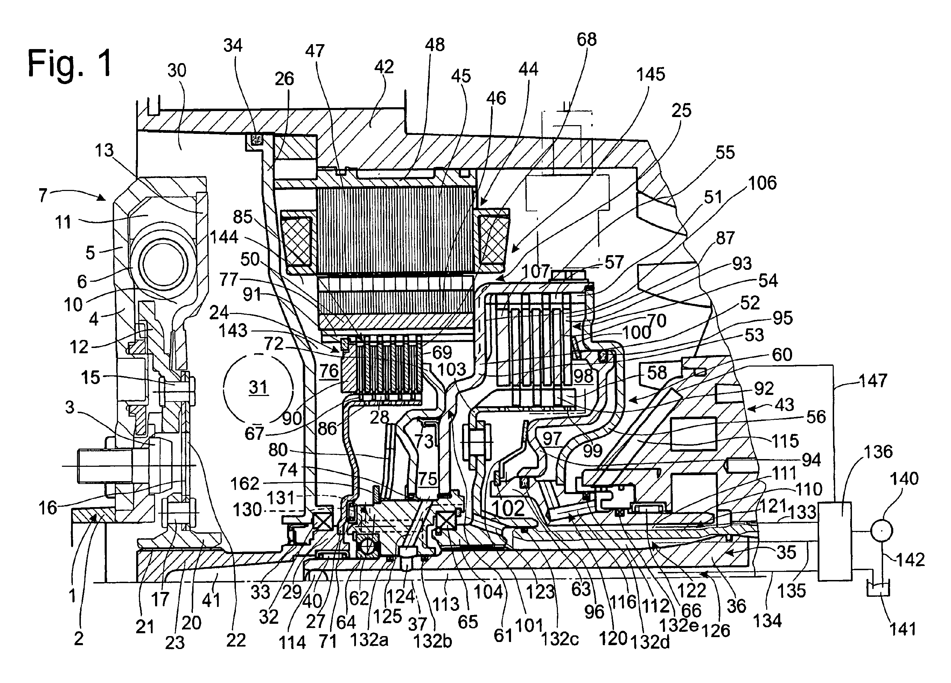

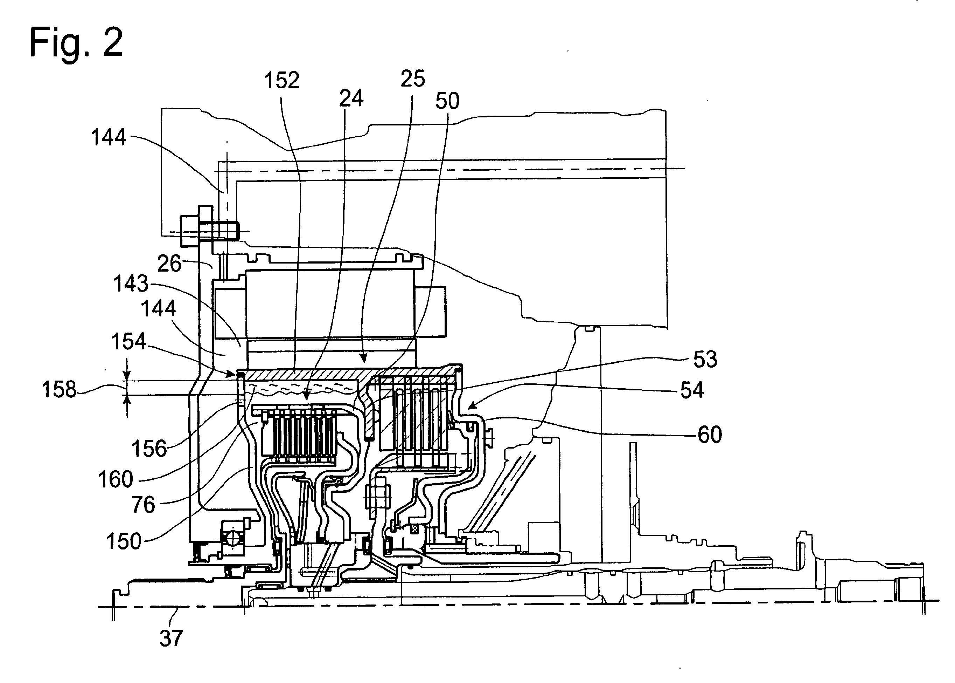

- Fig. 2: wie Fig. 1, aber mit einer zweiten über ein Kupplungsgehäuse verfügenden Kupplungsvorrichtung.

Fig. 1 zeigt in schematischer Form eine Kurbelwelle 2 einer Brennkraft-Maschine 1, an welcher über Befestigungsmittel 3 ein Primärflansch 4 eines Torsionsschwingungsdämpfers 7 angebunden ist. An dem Primärflansch 4 ist im radial äußeren Bereich eine Deckplatte 13 befestigt, die gemeinsam mit dem Primärflansch 4 eine Fettkammer 10 begrenzt, welche zur Aufnahme eines in Umfangsrichtung wirksamen Energiespeichersatzes 6 dient, der sich über Gleitelemente 11 radial und ggf. auch in Umfangsrichtung abstützt. Der Energiespeichersatz 6 wird mittels des Primärflansches 4 und/oder der Deckplatte 13 bei Einleitung von Torsionsschwingungen an der Kurbelwelle 2 angesteuert, und stützt sich anderenends an einer Nabenscheibe 12 ab. Diese Nabenscheibe 12 dient in ihrem radial inneren Bereich zur Aufnahme axialelastischer Elemente 16 mittels erster Verbindungsmittel 15, wobei diese axialelastischen Elemente 16 ihrerseits über zweite Verbindungsmittel 17 eine Torsionsdämpfer-Nabe 20 tragen. Durch den Primärflansch 4, den Energiespeichersatz 6, die Gleitelemente 11 sowie die Deckplatte 13 wird ein antriebsseitiges Übertragungselement 5 des Torsionsschwingungsdämpfers 7 gebildet, während die Nabenscheibe 12 gemeinsam den axialelastischen Elementen 16 und der Torsionsdämpfer-Nabe 20 ein abtriebsseitiges Übertragungselement 22 des Torsionsschwingungsdämpfers 7 bilden. Zwischen den beiden Übertragungselementen 5 und 22, genauer hierbei zwischen der Nabenscheibe 12 und der Deckplatte 13, ist ein Axialkraftspeicher 14 vorgesehen, der zum einen die beiden Übertragungselemente 5 und 22 in vorbestimmter axialer Distanz zueinander halten und andererseits die Fettkammer 10 gegen einen Austritt darin enthaltenen fluidförmigem Mediums bewahren soll.

Zurückkommend auf die Torsionsdämpfer-Nabe 20 des abtriebsseitigen Übertragungselementes 22, greift diese über eine Verzahnung 21 drehfest, aber axial verlagerbar an einem Lagerzapfen 23 einer Kupplungsanordnung 25 an, die, wie nachfolgend noch eingehend erläutert werden soll, über eine erste Kopplungsvorrichtung 24 sowie über eine zweite Kopplungsvorrichtung 54 verfügt.

Der Lagerzapfen 23 der Kopplungsanordnung 25 trägt an seiner radialen Außenseite eine Lagerung 32, durch welche der Lagerzapfen 23 mittels einer Trennwandung 26 gegenüber einem Getriebegehäuse 42 eines Getriebes 43 zentriert werden soll. Die Trennwandung 26 stützt sich hierzu über eine radial äußere Abdichtung 34 an einer Innenwandung des Getriebegehäuses 42 ab, sowie über eine radial innere Abdichtung 33 am Außendurchmesser des Lagerzapfens 23. Durch die Trennwandung wird ein im wesentlichen trockener Umgebungsraum 30, der zur Durchführung einer Welle 31 eines Antriebsstranges geeignet sein kann, von einem Nassraum 143 getrennt, der sich jenseits der Trennwandung 26 befindet und zur Aufnahme der beiden Kupplungsvorrichtungen 24 und 54 der Kopplungsanordnung 25 sowie zur Aufnahme einer elektrischen Maschine 44 dient. Diese gliedert sich in einen Stator 45 auf, der über eine Halterung 48 an einer Innenwandung des Getriebegehäuses 42 befestigt ist, und über einen Spalt 47 auf einen Rotor 46 einwirkt. Der Rotor 46 vollzieht ebenso wie der Torsionsschwingungsdämpfer 7, die Kurbelwelle 2 der Brennkraft-Maschine 1, der Lagerzapfen 23 der Kopplungsanordnung 25 sowie ein Abtrieb 35 in Form einer Getriebeeingangswelle 36, jeweils eine Drehbewegung um eine zumindest im wesentlichen für die vorgenannten Bauelemente gleiche Drehachse 37. Ergänzend sei hier festzustellen, dass der Lagerzapfen 23 an seiner der Getriebeeingangswelle 36 zugewandten Seite über eine Aushöhlung 41 verfügt, in welcher das antriebsseitige freie Ende der Getriebeeingangswelle 36 axial eingreift, und hierbei über eine als Pilotlager dienende Radiallagerung 40 gegenüber dem Lagerzapfen 23 und somit gegenüber dem Getriebegehäuse 42 zentriert ist.

Der Lagerzapfen 23 ist an seiner von der Kurbelwelle 2 abgewandten Seite drehfest mit einem ersten antriebsseitigen Kupplungselemententräger 27 verbunden, und kann demnach funktional als Teil dieses ersten antriebsseitigen Kupplungselemententrägers 27 angesehen werden. Dieser Kupplungselemententräger 27 ist im radial äußeren Bereich über eine Verzahnung 28 mit radial inneren ersten Kupplungselementen 67 der ersten Kupplungsvorrichtung 24 drehfest verbunden. Diese radial inneren ersten Kupplungselemente 67 in Form von Innenlamellen sind mit radial äußeren ersten Kupplungselementen 68 in Form von Außenlamellen in Wirkverbindung versetzbar, wenn ein erster Kolben 72 der ersten Kupplungsvorrichtung 24 die ersten Kupplungselemente 67, 68 in Richtung zur Trennwandung 26 durch eine axiale Anpresskraft belastet, wodurch sich die ersten Kupplungselemente 67, 68 unter Reibwirkung unter Ausbildung eines Reibbereiches 69 axial aneinander abstützen, bis schließlich das der Trennwandung 26 am nächsten kommende erste Kupplungselement 67 sich über eine Endlamelle 90 an einem gegenüber dem ersten antriebsseitigen Kupplungselemententräger 27 ortsfesten Axialstützring 91 abstützt. Sind dagegen die ersten Kupplungselemente 67, 68 von einer durch den Kolben 72 ausgeübten axialen Anpresskraft entlastet, so wird die im Reibbereich 69 anliegende Reibwirkung zumindest teilweise aufgehoben. Bei dem letztgenannten Zustand des Kolbens befindet sich die erste Kupplungsvorrichtung 24 in ihrer Ausrückposition, während bei Erzeugung der axialen Anpresskraft durch den Kolben 72 auf die ersten Kupplungselemente 67, 68 die erste Kupplungsvorrichtung 24 ihre Einrückposition einnimmt. Somit bildet der Kolben 72 gemeinsam mit den ersten Kupplungselementen 67 und 68 Kupplungskomponenten 85 der ersten Kupplungsvorrichtung 24.

Die radial äußeren ersten Kupplungselemente 68 stehen über eine Verzahnung 77 in Drehverbindung mit einem ersten abtriebsseitigen Kupplungselemententräger 50 der ersten Kupplungsvorrichtung 24, der mit einem zweiten antriebsseitigen Kupplungselemententräger 51 der zweiten Kupplungsvorrichtung 54 drehfest verbunden ist. Der zweite antriebsseitige Kupplungselemententräger 51 setzt sich zusammen aus einer zumindest im wesentlichen radial verlaufenden antriebsseitigen Radialgehäusewandung 53 sowie einer im radial äußeren Bereich dieser Radialgehäusewandung 53 angeformten Axialgehäusewandung 55. Diese Axialgehäusewandung 55 nimmt an ihrem abtriebsseitigen freien Ende eine weitere, abtriebsseitige Radialgehäusewandung 56 drehfest und dicht auf, die gemeinsam mit der antriebsseitigen Radialgehäusewandung 53 und der Axialgehäusewandung 55 ein zumindest im wesentlichen gegenüber dem Nassraum 143 sowie gegenüber dem Getriebegehäuse 42 dichtes Kupplungsgehäuse 60 der zweiten Kupplungsvorrichtung 54 bildet.

Bevor im einzelnen auf die zweite Kupplungsvorrichtung 54 eingegangen wird, soll zunächst darauf hingewiesen werden, dass der erste abtriebsseitige Kupplungselemententräger 50 und der zweite antriebsseitige Kupplungselemententräger 51 zusammen ein Koppelelement 61 der Kopplungsanordnung 25 bilden, wobei dieses Koppelelement 61 einen wesentlichen Beitrag zur Ausbildung der Kopplungsanordnung 25 als Kupplungsmodul 145 leistet.

Der zweite antriebsseitige Kupplungselemententräger 51 steht über eine Verzahnung 57 in drehfester Verbindung mit radial äußeren zweiten Kupplungselementen 93, die über einen Reibbereich 70 mit radial inneren zweiten Kupplungselementen 92 in Wirkverbindung bringbar sind, wobei die radial inneren zweiten Kupplungselemente 92 über eine Verzahnung 58 drehfest mit einem zweiten abtriebsseitigen Kupplungselemententräger 103 der zweiten Kupplungsvorrichtung 54 verbunden ist. Die zweite Kupplungsvorrichtung 54 befindet sich in ihrer Einrückposition, wenn der Kolben 94 über einen Anlageenergiespeicher 100, der den Einrückvorgang weicher gestalten soll, eine axiale Anpresskraft auf die zweiten Kupplungselemente 92, 93 überträgt, so dass diese sich über eine Endlamelle 107 an einem Endanschlag 106 der antriebsseitigen Radialgehäusewandung 53 abstützen. Die zweite Kupplungsvorrichtung 54 befindet sich dagegen in ihrer Ausrückposition, wenn die vom Kolben 94 ausgeübte axiale Anpresskraft soweit reduziert ist, dass die am Reibbereich 70 wirksame Reibwirkung zwischen den zweiten Kupplungselementen 92, 93 zumindest im wesentlichen aufgehoben ist.

Das Koppelelement 61 und hierbei insbesondere dessen antriebsseitige Radialgehäusewandung 53 ist im radial inneren Bereich drehfest mit einer Koppelelementen-Nabe 62 verbunden, die mittels einer Lagerung 64 gegenüber der Getriebeeingangswelle 36 zentriert ist, und mittels einer weiteren Lagerung 71 gegenüber dem ersten antriebsseitigen Kupplungselemententräger 27 und damit gegenüber dem Lagerzapfen 23 der Kopplungsanordnung 25 axial positioniert ist. Die Koppelelementen-Nabe 62 zentriert ihrerseits über eine weitere Lagerung 65 eine Nabe 104 des zweiten abtriebsseitigen Kupplungselemententrägers 103.

Die erste Kupplungsvorrichtung 24 weist, axial begrenzt durch den Kolben 72 zum einen und durch die antriebsseitige Radialgehäusewandung 53 der zweiten Kupplungsvorrichtung 54 zum anderen einen Druckraum 75 auf, der mittels Abdichtungen 73, 74 gegenüber einem ersten Kühlraum 76 getrennt ist, in welchem die ersten Kupplungselemente 67 und 68 angeordnet sind. Dieser Kühlraum 76 verfügt über einen Axialkraftspeicher 80, der vorzugsweise mit zwei geschichteten Federn gebildet ist, und sich einerends an der Kammerwand 81 und anderenends an einer mit der Koppelelementen-Nabe 62 festen Halterung 162 abstützt. Der Axialkraftspeicher 80 dient zur Belastung des Kolbens 72 in Richtung zur antriebsseitigen Radialwandung 53 der zweiten Kupplungsvorrichtung 54. Hierdurch soll eine unerwünschte Anlagerung des Kolbens 72 an den ersten Kupplungselementen 67 und 68 in der Ausrückposition und damit das Entstehen einer unerwünschten Momentenübertragung durch die erste Kupplungsvorrichtung 24 vermieden werden.

Im Kühlraum 76 befindliches fluidförmiges Medium wird, bedingt durch die Rotation der Kupplungsanordnung 25 um die Drehachse 37, nach radial außen beschleunigt, um dort Strömungsdurchlässe 86 im ersten abtriebsseitigen Kupplungselemententräger 50 zu durchströmen und damit den Reibbereich 69 der ersten Kupplungsvorrichtung 24 effizient zu kühlen. Nach Durchgang durch den Reibbereich 69 gelangt das fluidförmige Medium über die Verzahnung 77 des ersten abtriebsseitigen Kupplungselemententrägers 50 in einen weiter nach radial außen führenden, dem Nassraum 143 zugeordneten Entsorgungsweg 144, und kann über diesen Entsorgungsweg 144 möglichst innerhalb des Getriebegehäuses 42 zu einer lediglich schematisch dargestellten Fluidbevorratung 141 zurückgeführt werden.

Wie Fig. 1 deutlich zeigt, ist die Fluidbevorratung 141 ebenso wie eine mit derselben über eine Koppelleitung 142 verbundene Versorgungsquelle 140 für fluidförmiges Medium abtriebsseitig der Kopplungsanordnung 25 vorgesehen, um über eine Steuer- und/oder Regeleinheit 136 Zuleitungen 133, 134 und 147 zu speisen, oder aber um von einer Ableitung 135 fluidförmiges Medium entgegen zu nehmen.

Auch die zweite Kupplungsvorrichtung 54 verfügt axial zwischen dem Kolben 94 und der benachbarten, abtriebsseitigen Radialgehäusewandung 56 des Kupplungsgehäuses 60 über einen Druckraum 97, weshalb der Kolben radial außen sowie radial innen über Abdichtungen 95, 96 jeweils von einem Kühlraum 98 getrennt ist, in welchem die zweiten Kupplungselemente 92 und 93 angeordnet sind, die gemeinsam mit dem Kolben 94 als Kupplungskomponenten 146 der zweiten Kupplungsvorrichtung 54 wirksam sind. Der Kolben 94 ist axial verschiebbar auf einer Kupplungsgehäuse-Nabe 63 des Kupplungsgehäuses 60 der zweiten Kupplungsvorrichtung 54 angeordnet, wobei die Kupplungsgehäuse-Nabe 63 gemeinsam mit einer ortsfesten Stützwelle 110, die als Hohlwelle ausgebildet ist, einen ersten ringförmigen Kanal 111 radial begrenzt, während die Stützwelle 110 ihrerseits gemeinsam mit der Getriebeeingangswelle 36 einen zweiten ringförmigen Kanal 112 begrenzt. Schließlich ist in der Getriebeeingangswelle 36 eine Mittenbohrung 113 vorgesehen, die antriebsseitig mittels eines dort eingelassenen Verschlusses 114 abgedichtet ist.

Zurückkommend auf die Kupplungsgehäuse-Nabe 63, ist diese von einer Leitung 116 durchdrungen, welche zum einen in den Druckraum 97 der zweiten Kupplungsvorrichtung 54 mündet, und zum anderen an einer im Getriebe 43 vorgesehenen Leitung 115 angeschlossen ist, wobei die Leitung 115 an die bereits erwähnte Zuleitung 147 der Steuer- und/oder Regeleinheit 136 angeschlossen ist. Mit den Leitungen 115 und 116 und gegebenenfalls der Zuleitung 147 entsteht eine erste Versorgungsleitung 120 zur Befüllung des Druckraumes 97 der zweiten Kupplungsvorrichtung 54 mit fluidförmigem Medium.

Eine zweite Versorgungsleitung 121 entsteht aufgrund des ersten ringförmigen Kanals 111 und gegebenenfalls der Zuleitung 133, und dient zum Anschluss des Kühlraums 98 der zweiten Kupplungsvorrichtung 54 an die Steuer- und/oder Regeleinheit 136. Fluidförmiges Medium strömt hierbei von der zweiten Versorgungsleitung 121 nach radial außen, um im zweiten abtriebsseitigen Kupplungselemententräger 103 vorgesehene Strömungsdurchlässe 99 zur Versorgung des Reibbereiches 70 der zweiten Kupplungsvorrichtung 54 zu durchströmen. Nach Durchströmung dieses Reibbereiches 70 wird das fluidförmige Medium an der Verzahnung 51 des zweiten antriebsseitigen Kupplungselemententrägers 51 wieder nach radial innen umgelenkt, um in einen Axialbereich zwischen der antriebsseitigen Radialgehäusewandung 53 des Kupplungsgehäuses 60 und dem zweiten abtriebsseitigen Kupplungselemententräger 103 nach radial innen bis zu dessen Nabe 104 zu gelangen, und dort die Lagerung 65 zumindest im wesentlichen axial zu durchdringen. Anschließend gelangt das fluidförmige Medium durch eine in der Koppelelementen-Nabe 62 ausgebildete, gestrichelt eingezeichnete weitere Leitung 130, die als Verbindungsleitung 131 wirksam ist, in den Kühlraum 76 der ersten Kupplungsvorrichtung 24, wo das fluidförmige Medium in bereits beschriebener Weise über die Strömungsdurchlässe 86 zum Reibbereich 69 dieser Kupplungsvorrichtung 24 gelangt. Anders als der Kühlraum 98 der zur Versorgungsquelle 140 näheren zweiten Kupplungsvorrichtung 54 wird der Kühlraum 76 der von der Versorgungsquelle 140 weiter entfernten ersten Kupplungsvorrichtung 24 nicht über eine eigene Versorgungsleitung mit frischem fluidförmigem Medium aus der Versorgungsquelle versorgt, sondern lediglich über die Verbindungsleitung 131 zum Kühlraum 98 der zweiten Kupplungsvorrichtung 54. Dadurch ist eine Versorgungsleitung einsparbar, was unter dem Aspekt, dass beide Kupplungsvorrichtungen 24 und 54 um die Drehachse 37 rotieren und somit eine enorme Umwälzung und daher Durchmischung fluidförmigen Mediums innerhalb des Kühlraumes 98 der zweiten Kupplungsvorrichtung 54 bewirken, unkritisch ist. Dadurch ist dafür gesorgt, dass das über die Verbindungsleitung 131 an den Kühlraum 76 der ersten Kupplungsvorrichtung 24 weitergeleitete fluidförmige Medium hinreichend kühl ist und somit auch bei der ersten Kupplungsvorrichtung 24 seine bestimmungsgemäße Funktion noch voll entfalten kann.

Lediglich ein Teil des zwischen der antriebsseitigen Radialgehäusewandung 53 und dem zweiten abtriebsseitigen Kupplungselemententräger 103 nach radial innen strömenden fluidförmigen Mediums gelangt über die Lagerung 65 und die Verbindungsleitung 131 in den Kühlraum 76 der ersten Kupplungsvorrichtung 24. Der restliche Teil dieses fluidförmigen Mediums tritt über eine in der Nabe 104 des zweiten abtriebsseitigen Kupplungselemententrägers 103 vorgesehene Leitung 123 in den zweiten ringförmigen Kanal 112, so dass die Leitung 123 gemeinsam mit dem zweiten ringförmigen Kanal 112 und gegebenenfalls der Ableitung 135 eine Entsorgungsleitung 122 für die zweite Kupplungsvorrichtung 54 bildet. Das abströmende fluidförmige Medium gelangt über die Ableitung 135 zur Steuer- und/oder Regeleinheit 136, und von dieser in die Fluidbevorratung 141. Von dort aus kann, ggf. nach Zwischenkühlung, das fluidförmige Medium über die Koppelleitung 142 wieder der Versorgungsquelle 140 zugeleitet werden, und steht damit erneut für die Zuleitungen 133, 134 und 147 zur Befüllung der Versorgungsleitung 120, 121 und 126 zur Verfügung.

Abschließend bleibt nachzutragen, dass auch die zweite Kupplungsvorrichtung 54 über einen Axialkraftspeicher 101 verfügt, der sich einerseits am Kolben 94 und andererseits an einem in der Kupplungsgehäuse-Nabe 63 eingelassenen Stützring 102 abstützt, und der den Kolben 94 in von den Kupplungselementen 92, 93 fortweisender Richtung belastet. Auch bei der zweiten Kupplungsvorrichtung 54 soll mittels des Axialkraftspeiches 101 einer unerwünschten Reibung zwischen dem Kupplungselementen 92, 93 bei ausgerückter Kupplungsvorrichtung 54 vorgebeugt werden.

Selbstverständlich müssen die einzelnen Versorgungsleitungen 120, 121 und 126 flüssigkeitsdicht voneinander isoliert sein, weshalb an den entsprechenden Stellen Dichtungen 132a bis 132e vorgesehen sind. Im Einzelnen handelt es sich hierbei um erste Dichtungen 132a und 132b, die radial zwischen der Koppelelementen-Nabe 62 und der gegenüber der Koppelelementen-Nabe 62 zumindest über die Lagerung 64 zentrierten Getriebeeingangswelle 36 angeordnet sind, um eine zweite Dichtung 132c radial zwischen der Stützwelle 110 und der gegenüber dieser Stützwelle 110 eine lediglich geringe radiale Relativbewegung vollziehenden Nabe 104 des abtriebsseitigen Kupplungselemententrägers 103, sowie um dritte Dichtungen 132d und 132e radial zwischen der Kupplungsgehäuse-Nabe 63 und dem Getriebegehäuse 42 des Getriebes 43, wobei die Kupplungsgehäuse-Nabe 63 gegenüber dem Getriebegehäuse 42 zumindest über die Lagerung 66 zentriert ist.

Fig. 2 zeigt eine Kupplungsanordnung 25, bei welcher nicht nur die zweite Kupplungsvorrichtung 54 über ein Kupplungsgehäuse 60 verfügt, sondern auch die erste Kupplungsvorrichtung 24 über ein Kupplungsgehäuse 154. Dieses setzt sich aus einer antriebsseitigen Gehäusewandung 150, einer sich daran radial außen anschließenden Axialgehäusewandung 152 und der antriebsseitigen Radialgehäusewandung 53 des zweiten Kupplungsgehäuses 60 zusammen. Zum Übertritt fluidförmigen Mediums aus dem Kühlraum 76 der ersten Kupplungsvorrichtung 24 in den Entsorgungsweg 144 ist die antriebsseitige Gehäusewandung 150 der ersten Kupplungsvorrichtung 24 in vorbestimmtem Radialabstand 158 innerhalb der Axialgehäusewandung 152 mit zumindest einem Durchlass 156, mit Vorzug sogar mit einer Mehrzahl an Durchlässen 156, versehen. Bedingt durch den Radialabstand 158 wird sich unter dem Einfluss der Fliehkraft bei Rotation der Kupplungsanordnung 25 um die Drehachse 37 ein zumindest im wesentlichen ringförmiger Flüssigkeitssumpf 160 ausbilden, innerhalb welchem sich Schmutzpartikel aufgrund deren gegenüber dem fluidförmigem Medium höheren spezifischen Gewichtes anreichern, und dadurch vor einem Übertritt über die Durchlässe 156 abgehalten werden. Diese Schmutzpartikel, die infolge Abriebes an der ersten Kupplungsvorrichtung 24 entstehen, sollen innerhalb des Kupplungsgehäuses 150 der ersten Kupplungsvorrichtung 24 zurückgehalten werden. Dadurch ist sicher gestellt, dass die Schmutzpartikel nicht über den Entsorgungsweg 144 zur elektrischen Maschine 44 gelangen, und sich dort unter der Wirkung von deren Magnetfeldern im Spalt 47 zwischen dem Stator 45 und dem Rotor 46 anlagern. Eine derartige Anlagerung würde den Spalt 47 zusetzen, und dadurch bei Relativbewegungen des Rotors 46 gegenüber dem Stator 45 das Risiko einer Schädigung oder gar Zerstörung der elektrischen Maschine 44 auslösen.

### Bezugszeichenliste

- 1: Brennkraft-Maschine
- 2: Kurbelwelle
- 3: Befestigungsmittel
- 4: Primärflansch
- 5: antriebsseitiges Übertragungselement
- 6: Energiespeichersatz
- 7: Torsionsschwingungsdämpfer
- 10: Fettkammer
- 11: Gleitelemente
- 12: Nabenscheibe
- 13: Deckplatte
- 14: Axialkraftspeicher
- 15: erste Verbindungsmittel
- 16: axialelastische Elemente
- 17: zweite Verbindungsmittel
- 20: Torsionsdämpfer-Nabe
- 21: Verzahnung
- 22: abtriebsseitiges Übertragungselement
- 23: Lagerzapfen
- 24: erste Kupplungsvorrichtung
- 25: Kopplungsanordnung
- 26: Trennwandung
- 27: erster antriebsseitiger Kupplungselemententräger
- 28: Verzahnung
- 29: Nabe
- 30: Umgebungsraum
- 31: Welle
- 32: Lagerung
- 33: radial innere Abdichtung
- 34: radial äußere Abdichtung
- 35: Abtrieb
- 36: Getriebeeingangswelle
- 37: Drehachse
- 40: Radiallagerung
- 41: Aushöhlung
- 42: Getriebegehäuse
- 43: Getriebe
- 44: elektrische Maschine
- 45: Stator
- 46: Rotor
- 47: Spalt
- 48: Halterung
- 50: erster abtriebsseitiger Kupplungselemententräger
- 51: zweiter antriebsseitiger Kupplungselemententräger
- 53: Radialgehäusewandung
- 54: zweite Kupplungsvorrichtung
- 55: Axialgehäusewandung
- 56: weitere Radialgehäusewandung
- 57: Verzahnung
- 58: Verzahnung
- 60: Kupplungsgehäuse
- 61: Koppelelement
- 62: Koppelelementen-Nabe
- 63: Kupplungsgehäuse-Nabe
- 64: Lager
- 65: Lager
- 66: Lager
- 67: radial innere erste Kupplungselemente
- 68: radial äußere erste Kupplungselemente
- 69: Reibbereich
- 70: Reibbereich
- 71: Lagerung
- 72: erster Kolben
- 73, 74: Abdichtungen
- 75: Druckraum
- 76: Kühlraum
- 77: Verzahnung
- 80: Axialenerglespeicher
- 81: Kammerwand
- 82: Abdichtung
- 84: Strömungsdurchlass
- 85: Kupplungskomponenten
- 86: Strömungsdurchlässe
- 87: zweite Kupplungskomponenten
- 90: Endlamelle
- 91: Axialstützring
- 92: radial innere zweite Kupplungselement
- 93: radial äußere zweite Kupplungselemente
- 94: zweiter Kolben
- 95, 96: Abdichtungen
- 97: Druckraum
- 98: Kühlraum
- 99: Strömungsdurchlässe
- 100: Anlegeenergiespeicher
- 101: Axialenergiespeicher
- 102: Stützring
- 103: zweiter abtriebsseitiger Kupplungselemententräger
- 104: Nabe
- 106: Endanschlag
- 107: Endlamelle
- 110: Stützwelle
- 111: erster ringförmiger Kanal
- 112: zweiter ringförmiger Kanal
- 113: Mittenbohrung
- 114: Verschluss
- 115,116: Leitung
- 120: erste Versorgungsleitung
- 121: zweite Versorgungsleitung
- 122: Entsorgungsleitung
- 123: Leitung
- 124: Radialverbindung
- 125: Leitung
- 126: dritte Versorgungsleitung
- 130: weitere Leitung
- 131: Verbindungsleitung
- 132a-e: Abdichtung
- 133,134: Zuleitungen
- 135: Ableitung
- 136: Steuer- und/oder Regeleinheit
- 140: Versorgungsquelle
- 141: Fluidbevorratung
- 142: Koppelleitung
- 143: Nassraum
- 144: Entsorgungsweg
- 145: Kupplungsmodul
- 147: Zuleitung
- 150: antriebsseitige Gehäusewandung
- 152: Axialgehäusewandung
- 154: Kupplungsgehäuse
- 156: Durchlass
- 158: Radialabstand
- 160: Flüssigkeitssumpf
- 162: Halterung

## Patentansprüche

1. Kopplungsanordnung mit einer ersten Kupplungsvorrichtung (24) zur Herstellung einer Wirkverbindung zwischen einer elektrischen Maschine (44) und einer Brennkraft-Maschine (1) bei in eingerückter Schaltposition befindlichen Kupplungskomponenten (67, 68) sowie zur Trennung der beiden Maschinen (1, 44) bei in ausgerückter Schaltposition befindlichen Kupplungskomponenten (67, 68), und mit einer zweiten Kupplungsvorrichtung (54) zur Herstellung einer Wirkverbindung zwischen zumindest einer der Maschinen (1, 44) und einem Abtrieb (35) bei in eingerückter Schaltposition befindlichen Kupplungskomponenten (92, 93) sowie zur Trennung der wenigstens einen Maschine (1, 44) vom Abtrieb (35) bei in ausgerückter Schaltposition befindlichen Kupplungskomponenten (92, 93), wobei die beiden Kupplungsvorrichtungen (24, 54) zur Versorgung mit fluidförmigem Medium über wenigstens eine Versorgungsleitung (120, 121, 126) mit unterschiedlichen Abständen an eine Versorgungsquelle (140) angeschlossen ist, und wobei die beiden Kupplungsvorrichtungen (24; 54) jeweils über Kupplungskomponenten (85; 87) in Form jeweils wenigstens eines Kolbens (72; 94) sowie jeweils zumindest eines Kupplungselementes (67, 68; 92, 93) verfügen, und durch den jeweiligen Kolben (72; 94) jeweils eine zumindest wesentliche Abdichtung zwischen je einem Druckraum (75; 97) und je einem das zumindest eine Kupplungselement (67, 68; 92, 93) aufnehmenden Kühlraum (76; 98) bewirkt ist, wobei die Druckräume (75; 97) beider Kupplungsvorrichtungen (24; 54) jeweils über eine Versorgungsleitung (120, 121; 126) und die beiden Kupplungsvorrichtungen (24, 54) über ein gemeinsames Koppelelement (61) verfügen, das als antriebsseitiger Kupplungselemententräger (51) der einen Kupplungsvorrichtung (54) und als abtriebsseitiger Kupplungselemententräger (50) der anderen Kupplungsvorrichtung (24) wirksam ist,
**dadurch gekennzeichnet,**
**dass** das Koppelelement (61) zur Trennung des Kühlraumes (98) der einen Kupplungsvorrichtung (54) von dem Kühlraum (76) der anderen Kupplungsvorrichtung (24) dient, und von den Kühlräumen (76; 98) lediglich der Kühlraum (98) der zur Versorgungsquelle (140) näheren Kupplungsvorrichtung (54) eine Versorgungsleitung (121) aufweist, der Kühlraum (76) der anderen Kupplungsvorrichtung (24) dagegen eine Verbindungsleitung (131) zum Kühlraum (98) der zur Versorgungsquelle (140) näheren Kupplungsvorrichtung (54).

2. Kopplungsanordnung nach Anspruch 1 mit wenigstens einer Entsorgungsleitung (122) für das fluidförmige Medium,
**dadurch gekennzeichnet,**
**dass** der Kupplungsvorrichtung (54) mit der zum Druckraum (97) führenden ersten Versorgungsleitung (120) und der zum Kühlraum (98) führenden zweiten Versorgungsleitung (121) eine Entsorgungsleitung (122) zugeordnet ist, während die andere Kupplungsvorrichtung (24) lediglich die zum Druckraum (75) führende dritte Versorgungsleitung (126) und die den Kühlraum (76) dieser Kupplungsvorrichtung (24) an den Kühlraum (98) der anderen Kupplungsvorrichtung (54) anschließende Verbindungsleitung (131) aufweist.

3. Kopplungsanordnung nach Anspruch 2,
**dadurch gekennzeichnet,**
**dass** durch die Entsorgungsleitung (122) fluidförmiges Medium einer Fluidbevorratung (141) zuführbar ist.

4. Kopplungsanordnung nach Anspruch 1 mit einer elektrischen Maschine (44), die über einen ortsfesten Stator (45) und einen relativ hierzu drehbaren Rotor (46) verfügt,
**dadurch gekennzeichnet,**
**dass** das den beiden Kupplungsvorrichtungen (24, 54) gemeinsame Koppelelement (61) den Rotor (46) der elektrischen Maschine (44) drehfest aufnimmt.

5. Kopplungsanordnung nach Anspruch 1 oder 4,
**dadurch gekennzeichnet,**
**dass** das Koppelelement (61) über eine Kupplungsgehäuse-Nabe (63) relativ drehbar, aber zumindest im wesentlichen axial gesichert, durch den Abtrieb (35) zentrierend aufgenommen ist.

6. Kopplungsanordnung nach Anspruch 1 mit einem die Wirkverbindung zur Brenn-kraft-Maschine (1) herstellenden, über eine Nabe (29) verfügenden antriebsseitigen Kupplungselemententräger (27) der ersten Kupplungsvorrichtung (24),
**dadurch gekennzeichnet,**
**dass** der antriebsseitige Kupplungselemententräger (27) der ersten Kupplungsvorrichtung (24) gegenüber dem Koppelelement (61) axial bewegungssichernd, aber relativ drehbar, angeordnet ist.

7. Kopplungsanordnung nach Anspruch 6,
**dadurch gekennzeichnet,**
**dass** der antriebsseitige Kupplungselemententräger (27) der ersten Kupplungsvorrichtung (24) den Abtrieb (35) zentrierend aufnimmt.

8. Kopplungsanordnung nach Anspruch 1 mit einem die Wirkverbindung zum Abtrieb (35) herstellenden und von demselben getragenen abtriebsseitigen Kupplungselemententräger (103) der zweiten Kupplungsvorrichtung (54),
**dadurch gekennzeichnet,**
**dass** der abtriebsseitige Kupplungselemententräger (103) der zweiten Kupplungsvorrichtung (54) relativ drehbar, aber zumindest im wesentlichen axial bewegungsgesichert, durch das Koppelelement (61) zentrierend aufgenommen ist.

9. Kopplungsanordnung nach Anspruch 1 mit einem zwischen der Brennkraft-Maschine (1) und dem Abtrieb (35) wirksamen, über ein antriebsseitiges Übertragungselement (5) und ein gegenüber demselben gegen die Wirkung von Energiespeichern (6) drehauslenkbaren Torsionsschwingungsdämpfer (7), der mit seinem antriebsseitigen Übertragungselement (5) an einer Kurbelwelle (2) der Brennkraft-Maschine (1) befestigt ist, und mit einer an seinem abtriebsseitigen Übertragungselement (22) vorgesehenen Torsionsdämpfer-Nabe (20) über eine Verzahnung (21) mit dem antriebsseitigen Kupplungselemententräger (27) der ersten Kupplungsvorrichtung (24) in Wirkverbindung steht,
**dadurch gekennzeichnet,**
**dass** die Torsionsdämpfer-Nabe (20) mittels axialelastischer Elemente (16) an einer Nabenscheibe (12) des abtriebsseitigen Übertragungselementes (22) befestigt ist.

10. Kopplungsanordnung nach Anspruch 9, bei welcher axial zwischen der Kurbelwelle (2) der Brennkraft-Maschine (1) oder dem Torsionsschwingungsdämpfer (7) und der ersten Kupplungseinrichtung (24) sowie der elektrischen Maschine (44) eine Trennwandung (26) vorgesehen ist, die den Kühlraum (76) der ersten Kupplungsvorrichtung (24) dichtend vom Umgebungsraum (30) der Kurbelwelle (2) isoliert,
**dadurch gekennzeichnet,**
**dass** der Umgebungsraum (30) zwischen der Kurbelwelle (2) oder dem Torsionsschwingungsdämpfer (7) und der Trennwandung (26) in Achsrichtung derart bemessen ist, dass zumindest eine Welle (31) eines Antriebsstranges in diesem Umgebungsraum (30) Aufnahme findet.

11. Kopplungsanordnung nach Anspruch 1,
**dadurch gekennzeichnet,**
**dass** das Koppelelement (61) sowohl eine Radialgehäusewandung (53) als auch eine Axialgehäusewandung (55) der zweiten Kupplungsvorrichtung (54) bildet, so dass gemeinsam mit einer sich an die Axialgehäusewandung (55) anschließenden, weiteren Radialgehäusewandung (56) ein die Kupplungskomponenten (87) der zweiten Kupplungsvorrichtung (54) umschließendes Kupplungsgehäuse (60) entsteht.

12. Kopplungsanordnung nach Anspruch 5 mit einem Abtrieb (35) in Form einer Getriebeeingangswelle (36),
**dadurch gekennzeichnet,**
**dass** die Kupplungsgehäuse-Nabe (63) eine Stützwelle (110) der zweiten Kupplungsvorrichtung (54) unter Bildung eines ersten ringförmigen Kanals (111) umschließt, und die Stützwelle (110) unter Bildung eines zweiten ringförmigen Kanals (112) die Getriebeeingangswelle (36) umschließt.

13. Kopplungsanordnung nach Anspruch 12,
**dadurch gekennzeichnet,**
**dass** die Getriebeeingangswelle (36) eine Mittenbohrung (113) aufweist, die an ihrem antriebsseitigen Ende über einen Verschluss (114) verfügt.

14. Kopplungsanordnung nach Anspruch 11,
**dadurch gekennzeichnet,**
**dass** bei der zweiten Kupplungsvorrichtung (54) der Kolben (94) gemeinsam mit der dem Koppelelement (61) zugeordneten Radialgehäusewandung (53) den Kühlraum (98) und gemeinsam mit der weiteren Radialgehäusewandung (56) den Druckraum (97) axial begrenzt.

15. Kopplungsanordnung nach Anspruch 14,
**dadurch gekennzeichnet,**
**dass** bei der zweiten Kupplungsvorrichtung (54) die dem Koppelelement (61) zugeordnete Radialgehäusewandung (53) und damit der Kühlraum (98) antriebsseitig des Kolbens (94) angeordnet ist, die weitere Radialgehäusewandung (56) und damit der Druckraum (97) abtriebsseitig.

16. Kopplungsanordnung nach Anspruch 14 oder 15,
**dadurch gekennzeichnet,**
**dass** das Koppelelement (61) mit seiner Radialgehäusewandung (53) gemeinsam mit dem der ersten Kupplungsvorrichtung (24) zugeordneten Kolben (72) den Druckraum (75) der ersten Kupplungsvorrichtung (24) axial begrenzt.

17. Kopplungsanordnung nach Anspruch 16,
**dadurch gekennzeichnet,**
**dass** der Kolben (72) der ersten Kupplungsvorrichtung (24) gemeinsam mit der antriebsseitigen Radialgehäusewandung (53) des Kupplungsgehäuses (60) den Kühlraum (76) der ersten Kupplungsvorrichtung (24) einerseits, die Trennwandung (26) dagegen andererseits axial begrenzt.

18. Kopplungsanordnung nach Anspruch 1, 16 oder 17 mit zumindest einem dem Kolben (72; 94) einer Kupplungsvorrichtung (24; 54) zugeordneten, beim Ausrückvorgang wirksamen Axialenergiespeicher (80; 101),
**dadurch gekennzeichnet,**
**dass** der Axialenergiespeicher (80; 101) den Ausrückvorgang unterstützt, und sich an der den jeweiligen Kolben (72; 94) aufnehmenden Nabe (62; 63) des jeweiligen Kupplungselemententrägers (50; 51) abstützt.

19. Kopplungsanordnung nach Anspruch 11, 12 oder 18,
**dadurch gekennzeichnet,**
**dass** eine in einem Getriebegehäuse (42) abtriebsseitig der zweiten Kupplungsvorrichtung (54) vorgesehene Leitung (115) gemeinsam mit einer in der Kupplungsgehäuse-Nabe (63) der abtriebsseitigen Radialgehäusewandung (56) der zweiten Kupplungsvorrichtung (54) ausgebildeten Leitung (116) die erste Versorgungsleitung (120) bildet.

20. Kopplungsanordnung nach Anspruch 12,
**dadurch gekennzeichnet,**
**dass** der zwischen der Kupplungsgehäuse-Nabe (63) und der Stützwelle (110) der zweiten Kupplungsvorrichtung (54) verlaufende, erste ringförmige Kanal (111) als zweite Versorgungsleitung (121) dient.

21. Kopplungsanordnung nach Anspruch 12,
**dadurch gekennzeichnet,**
**dass** der zwischen der Stützwelle (110) der zweiten Kupplungsvorrichtung (54) und der Getriebeeingangswelle (36) verlaufende, zweite ringförmige Kanal (112) gemeinsam mit einer die Nabe (104) des abtriebsseitigen Kupplungselemententrägers (103) der zweiten Kupplungsvorrichtung (54) durchdringenden Leitung (123) als Entsorgungsleitung (122) vorgesehen ist.

22. Kopplungsanordnung nach Anspruch 13,
**dadurch gekennzeichnet,**
**dass** die Mittenbohrung (113) der Getriebeeingangswelle (36) gemeinsam mit einer in der Getriebeeingangswelle (36) vorgesehenen Radialverbindung (124) und einer die Koppelelementen-Nabe (62) durchdringenden Leitung (125) als dritte Versorgungsleitung (126) dient.

23. Kopplungsanordnung nach Anspruch 18,
**dadurch gekennzeichnet,**
**dass** eine die Koppelelementen-Nabe (62) durchdringende, den Kühlraum (98) der zweiten Kupplungsvorrichtung (54) mit dem Kühlraum (76) der ersten Kupplungsvorrichtung (24) verbindende weitere Leitung (130) als Verbindungsleitung (131) wirksam ist.

24. Kopplungsanordnung nach einem der Ansprüche 2 6, 7, 9 oder 21 bis 23,
**dadurch gekennzeichnet,**
**dass** die Zentrierung sowie die axiale Bewegungssicherung der Koppelelementen-Nabe (62) gegenüber der Getriebeeingangswelle (36) zum einen und gegenüber den Naben (29, 63) des antriebsseitigen Kupplungselemententrägers (27) der ersten Kupplungsvorrichtung (24) sowie des abtriebsseitigen Kupplungselemententrägers (103) der zweiten Kupplungsvorrichtung (54) zum anderen jeweils mittels Lagerungen (64, 65, 71) erfolgt.

25. Kopplungsanordnung nach Anspruch 12 oder 13 und 24,
**dadurch gekennzeichnet,**
**dass** die Nabe (29) des antriebsseitigen Kupplungselemententrägers (27) der ersten Kupplungsvorrichtung (24) über eine Aushöhlung (41) verfügt, die zur Zentrierung der Getriebeeingangswelle (36) vorgesehen ist.

26. Kopplungsanordnung nach einem der Ansprüche 11 oder 14 bis 17,
**dadurch gekennzeichnet,**
**dass** die erste Kupplungsvorrichtung (24) eine antriebsseitige Gehäusewandung (150) aufweist, die gemeinsam mit einer gegenüber dem ersten antriebsseitigen Kupplungselemententräger (50) drehfesten, radial äußeren Axialgehäusewandung (152) und der antriebsseitigen Radialgehäusewandung (53) ein Kupplungsgehäuse (154) der ersten Kupplungsvorrichtung (24) bildet.

27. Kopplungsanordnung nach Anspruch 26,
**dadurch gekennzeichnet,**
**dass** die antriebsseitige Gehäusewandung (150) der ersten Kupplungsvorrichtung (24) zumindest einen Durchlass (156) aufweist, durch welchen der Kühlraum (76) der ersten Kupplungsvorrichtung (24) mit dem Entsorgungsweg (144) in Strömungsverbindung versetzbar ist.

28. Kopplungsanordnung nach Anspruch 27,
**dadurch gekennzeichnet,**
**dass** der Durchlass in der antriebsseitigen Gehäusewandung (150) der ersten Kupplungsvorrichtung (24) gegenüber der Axialgehäusewandung (152) dieser Kupplungsvorrichtung (24) um einen vorbestimmten Radialabstand (158) nach innen versetzt vorgesehen ist.

29. Kopplungsanordnung nach Anspruch 22,
**dadurch gekennzeichnet,**
**dass** die Nabe (104) des zweiten abtriebsseitigen Kupplungselemententrägers (103) mit einer Leitung (123) für fluidförmiges Medium versehen ist.

## Claims

1. Coupling arrangement having a first clutch apparatus (24) for producing an operative connection between an electric machine (44) and an internal combustion engine (1) when clutch components (67, 68) are situated in an engaged switching position and for separating the machine (44) and engine (1) when clutch components (67, 68) are situated in a disengaged switching position, and having a second clutch apparatus (54) for producing an operative connection between at least one of the machine (44) and the engine (1) and an output means (35) when clutch components (92, 93) are situated in an engaged switching position and for separating the at least one of the machine (44) and the engine (1) from the output means (35) when clutch components (92, 93) are situated in a disengaged switching position, the two clutch apparatuses (24, 54) being connected to a supply source (140) for supply with fluid medium via at least one supply line (120, 121, 126) at different spacings, and the two clutch apparatuses (24; 54) having in each case clutch components (85; 87) in the form of in each case at least one piston (72; 94) and of in each case at least one clutch element (67, 68; 92, 93), and in each case an at least substantial sealing action between in each case one pressure chamber (75; 97) and in each case one cooling chamber (76; 98) which accommodates the at least one clutch element (67, 68; 92, 93) being brought about by the respective piston (72; 94), the pressure chambers (75; 97) of both clutch apparatuses (24; 54) having in each case a supply line (120, 121; 126) and the two clutch apparatuses (24, 54) having a common coupling element (61) which acts as drive-side clutch-element carrier (51) of one clutch apparatus (54) and as output-side clutch-element carrier (50) of the other clutch apparatus (24), **characterized in that** the coupling element (61) serves to separate the cooling chamber (98) of one clutch apparatus (54) from the cooling chamber (76) of the other clutch apparatus (24), and, of the cooling chambers (76; 98), only the cooling chamber (98) of the clutch apparatus (54) which is closer to the supply source (140) has a supply line (121), whereas the cooling chamber (76) of the other clutch apparatus (24) has a connecting line (131) to the cooling chamber (98) of the clutch apparatus (54) which is closer to the supply source (140).

2. Coupling arrangement according to Claim 1 having at least one disposal line (122) for the fluid medium, **characterized in that** the clutch apparatus (54) having the first supply line (120) which leads to the pressure chamber (97) and the second supply line (121) which leads to the cooling chamber (98) is assigned a disposal line (122), while the other clutch apparatus (24) has only the third supply line (126) which leads to the pressure chamber (75) and the connecting line (131) which connects the cooling chamber (76) of this clutch apparatus (24) to the cooling chamber (98) of the other clutch apparatus (54).

3. Coupling arrangement according to Claim 2, **characterized in that** fluid medium can be fed through the disposal line (122) to a fluid store (141).

4. Coupling arrangement according to Claim 1 having an electric machine (44) which has a stationary stator (45) and a rotor (46) which can be rotated relative to the said stator (45), **characterized in that** the coupling element (61) which is common to the two clutch apparatuses (24, 54) accommodates the rotor (46) of the electric machine (44) in a rotationally fixed manner.

5. Coupling arrangement according to Claim 1 or 4, **characterized in that** the coupling element (61) is accommodated in a centring manner by the output means (35), via a clutch-housing hub (63) such that it can be rotated relatively but is at least substantially secured axially.

6. Coupling arrangement according to Claim 1 having a drive-side clutch-element carrier (27) of the first clutch apparatus (24), which drive-side clutch-element carrier (27) produces an operative connection to the internal combustion engine (1) and has a hub (29), **characterized in that** the drive-side clutch-element carrier (27) of the first clutch apparatus (24) is arranged such that it is motionally secured axially with respect to the coupling element (61), but can be rotated relative to the latter.

7. Coupling arrangement according to Claim 6, **characterized in that** the drive-side clutch-element carrier (27) of the first clutch apparatus (24) accommodates the output means (35) in a centring manner.

8. Coupling arrangement according to Claim 1 having an output-side clutch-element carrier (103) of the second clutch apparatus (54), which output-side clutch-element carrier (103) produces the operative connection to the output means (35) and is carried by the latter, **characterized in that** the output-side clutch-element carrier (103) of the second clutch apparatus (54) is received in a centring manner by the coupling element (61), such that it can be rotated relatively, but is at least substantially motionally secured axially.

9. Coupling arrangement according to Claim 1 having a torsional vibration damper (7) which is active between the internal combustion engine (1) and the output means (35), can be deflected rotationally via a drive-side transmission element (5) and counter to the action of energy accumulators (6), is fastened with its drive-side transmission element (5) to a crankshaft (2) of the internal combustion engine (1), and is operatively connected via a toothing system (21) to the drive-side clutch-element carrier (27) of the first clutch apparatus (24) by way of a torsional-damper hub (20) which is provided on its output-side transmission element (22), **characterized in that** the torsional-damper hub (20) is fastened by means of axially elastic elements (16) to a hub plate (12) of the output-side transmission element (22).

10. Coupling arrangement according to Claim 9, in which a dividing wall (26) which isolates the cooling chamber (76) of the first clutch apparatus (24) sealingly from the surrounding chamber (30) of the crankshaft (2) is provided axially between the crankshaft (2) of the internal combustion engine (1) or the torsional vibration damper (7) and the first clutch device (24) and the electric machine (44), **characterized in that** the surrounding space (30) between the crankshaft (2) or the torsional vibration damper (7) and the dividing wall (26) is dimensioned in the axial direction in such a way that at least one shaft (31) of a drive train is accommodated in this surrounding space (30).

11. Coupling arrangement according to Claim 1, **characterized in that** the coupling element (61) forms both a radial housing wall (53) and an axial housing wall (55) of the second clutch apparatus (54), with the result that a clutch housing (60) which encloses the clutch components (87) of the second clutch apparatus (54) is produced together with a further radial housing wall (56) which adjoins the axial housing wall (55).

12. Coupling arrangement according to Claim 5 with an output means (35) in the form of a transmission input shaft (36), **characterized in that** the clutch-housing hub (63) encloses a supporting shaft (110) of the second clutch apparatus (54) with the formation of a first annular channel (111), and the supporting shaft (110) encloses the transmission input shaft (36) with the formation of a second annular channel (112).

13. Coupling arrangement according to Claim 12, **characterized in that** the transmission input shaft (36) has a centre hole (113) which has a closure (114) at its drive-side end.

14. Coupling arrangement according to Claim 11, **characterized in that**, in the second clutch apparatus (54), the piston (94) axially delimits the cooling chamber (98) together with the radial housing wall (53) which is assigned to the coupling element (61) and axially delimits the pressure chamber (97) together with the further radial housing wall (56).

15. Coupling arrangement according to Claim 14, **characterized in that**, in the second clutch apparatus (54), the radial housing wall (53) which is assigned to the coupling element (61) and therefore the cooling chamber (98) are arranged on the drive side of the piston (94), and the further radial housing wall (56) and therefore the pressure chamber (97) are arranged on the output side.

16. Coupling arrangement according to Claim 14 or 15, **characterized in that** the coupling element (61) axially delimits the pressure chamber (75) of the first clutch apparatus (24) by way of its radial housing wall (53) together with the piston (72) which is assigned to the first clutch apparatus (24).

17. Coupling arrangement according to Claim 16, **characterized in that**, together with the drive-side radial housing wall (53) of the clutch housing (60), the piston (72) of the first clutch apparatus (24) axially delimits the cooling chamber (76) of the first clutch apparatus (24) on one side, and axially delimits the dividing wall (26) on the other side with respect to that.

18. Coupling arrangement according to Claim 1, 16 or 17 having at least one axial energy accumulator (80; 101) which is assigned to the piston (72; 94) of a clutch apparatus (24; 54) and is active during the disengagement operation, **characterized in that** the axial energy accumulator (80; 101) assists the disengagement operation and is supported on that hub (62; 63) of the respective clutch-element carrier (50; 51) which accommodates the respective piston (72; 94).

19. Coupling arrangement according to Claim 11, 12 or 18, **characterized in that** a line (115) which is provided in a transmission housing (42) on the output side of the second clutch apparatus (54) forms the first supply line (120) together with a line (116) which is formed in the clutch-housing hub (63) of the output-side radial housing wall (56) of the second clutch apparatus (54).

20. Coupling arrangement according to Claim 12, **characterized in that** the first annular channel (111) which runs between the clutch-housing hub (63) and the supporting shaft (110) of the second clutch apparatus (54) serves as second supply line (121).

21. Coupling arrangement according to Claim 12, **characterized in that** the second annular channel (112) which runs between the supporting shaft (110) of the second clutch apparatus (54) and the transmission input shaft (36) is provided as disposal line (122) together with a line (123) which penetrates the hub (104) of the output-side clutch-element carrier (103) of the second clutch apparatus (54).

22. Coupling arrangement according to Claim 13, **characterized in that** the centre hole (113) of the transmission input shaft (36) serves as third supply line (126) together with a radial connection (124) which is provided in the transmission input shaft (36) and a line (125) which penetrates the coupling-element hub (62).

23. Coupling arrangement according to Claim 18, **characterized in that** a further line (130) which penetrates the coupling-element hub (62) and connects the cooling chamber (98) of the second clutch apparatus (54) to the cooling chamber (76) of the first clutch apparatus (24) is active as connecting line (131).

24. Coupling arrangement according to one of Claims 6, 7, 9 or 21 to 23, **characterized in that** the centring and the axial motional securing of the coupling-element hub (62) take place in each case by means of bearings (64, 65, 71), firstly with respect to the transmission input shaft (36) and secondly with respect to the hubs (29, 63) of the drive-side clutch-element carrier (27) of the first clutch apparatus (24) and of the output-side clutch-element carrier (103) of the second clutch apparatus (54).

25. Coupling arrangement according to Claims 12 or 13 and 24, **characterized in that** the hub (29) of the drive-side clutch-element carrier (27) of the first clutch apparatus (24) has a cavity (41) which is provided for centring the transmission input shaft (36).

26. Coupling arrangement according to one of Claims 11 or 14 to 17, **characterized in that** the first clutch apparatus (24) has a drive-side housing wall (150) which forms a clutch housing (154) of the first clutch apparatus (24) together with a radially outer axial housing wall (152) which is rotationally fixed with respect to the first drive-side clutch-element carrier (50) and together with the drive-side radial housing wall (53).

27. Coupling arrangement according to Claim 26, **characterized in that** the drive-side housing wall (150) of the first clutch apparatus (24) has at least one passage (156), by which the cooling chamber (76) of the first clutch apparatus (24) can be flow-connected to the disposal path (144).

28. Coupling arrangement according to Claim 27, **characterized in that** the passage in the drive-side housing wall (150) of the first clutch apparatus (24) is provided offset to the inside by a predefined radial spacing (158) from the axial housing wall (152) of the said clutch apparatus (24).

29. Coupling arrangement according to Claim 22, **characterized in that** the hub (104) of the second output-side clutch-element carrier (103) is provided with a line (123) for fluid medium.

## Revendications

1. Agencement d'embrayage doté d'un premier dispositif de couplage (24) permettant d'établir une liaison efficace entre un moteur électrique (44) et un moteur à combustion (1) pour des composants de couplage (67, 68) se trouvant dans une position de changement de vitesse enclenchée ainsi que de séparer les deux moteurs (1, 44) pour des composants de couplage (67, 68) se trouvant dans une position de changement de vitesse et avec un deuxième dispositif de couplage (54) permettant d'établir une liaison efficace entre au moins un des moteurs (1, 44) et un entraînement de sortie (35) lorsque les composants de couplage (92, 93) se trouvent dans la position de changement de vitesse enclenchée ainsi que de séparer l'au moins un moteur (1, 44) de l'entraînement de sortie (35) lorsque les composants de couplage (92, 93) se trouvent dans la position de changement de vitesse, les deux dispositifs de couplage (24, 54) étant raccordés à différentes distances à une source d'alimentation (140) via au moins une conduite d'alimentation (120, 121, 126) pour réaliser l'alimentation en agent liquide et les deux dispositifs de couplage (24 ; 54) disposant respectivement de composants de couplage (85 ; 87) prenant respectivement la forme d'au moins un piston (72 ; 94) ainsi que de respectivement au moins un élément de couplage (67, 68 ; 92, 93) et respectivement au moins un joint étant actionné par le piston (72 ; 94) respectif entre respectivement une chambre de pression (75 ; 97) et respectivement une chambre de refroidissement (76 ; 98) logeant au moins un élément de couplage (67, 68 ; 92, 93), les chambres de pression (75 ; 97) des deux dispositifs de couplage (24 ; 54) disposant respectivement d'une conduite d'alimentation (120, 121 ; 126) et les deux dispositifs de couplage (24, 54) disposant d'un élément de couplage (61) commun agissant sous la forme d'un support d'élément de couplage (51) situé côté entraînement d'entrée du premier dispositif de couplage (54) et sous la forme d'un support d'élément de couplage (50) situé côté entraînement de sortie de l'autre dispositif de couplage (24), **caractérisé en ce que** l'élément de couplage (61) sert à séparer la chambre de refroidissement (98) du premier dispositif de couplage (54) de la chambre de refroidissement (76) de l'autre dispositif de couplage (24), sachant que parmi les chambres de refroidissement (76 ; 98), seule la chambre de refroidissement (98) du dispositif de couplage (54) situé le plus près de la source d'alimentation (140) présente une conduite d'alimentation (121), la chambre de refroidissement (76) de l'autre dispositif de couplage (24) comportant quant à elle une conduite de raccordement (131) à la chambre de refroidissement (98) du dispositif de couplage (54) situé le plus près de la source d'alimentation (140).

2. Agencement d'embrayage selon la revendication 1, doté d'au moins une conduite d'évacuation (122) pour l'agent liquide, **caractérisé en ce que** le dispositif de couplage (54) est associé à une première conduite d'alimentation (120) conduisant à la chambre de pression (97) et **en ce qu'**une conduite d'évacuation (122) est associée à une deuxième conduite d'alimentation (121) conduisant à la chambre de refroidissement (98) tandis que l'autre dispositif de couplage (24) comporte seulement une troisième conduite d'alimentation (126) conduisant à la chambre de pression (75) et la conduite de raccordement (131) raccordant la chambre de refroidissement (76) de ce dispositif de couplage (24) avec la chambre de refroidissement (98) de l'autre dispositif de couplage (54).

3. Agencement d'embrayage selon la revendication 2, **caractérisé en ce que** l'agent liquide d'un réservoir de liquide (141) peut être acheminé à travers la conduite d'évacuation (122).

4. Agencement d'embrayage selon la revendication 1, doté d'un moteur électrique (44) disposant d'un stator (45) fixe et d'un rotor (46) tournant par rapport à lui, **caractérisé en ce que** l'élément de couplage (61) commun aux deux dispositifs de couplage (24, 54) loge le rotor (46) du moteur électrique (44) de façon fixe sans rotation.

5. Agencement d'embrayage selon la revendication 1 ou 4, **caractérisé en ce que** l'élément de couplage (61) est assuré de façon tournante via un moyeu de boîtier de couplage (63) mais logé de façon centrée au moins pour l'essentiel dans le plan axial par l'entraînement de sortie (35).

6. Agencement d'embrayage selon la revendication 1, doté d'un support d'élément de couplage (27) situé côté entraînement d'entrée du premier dispositif de couplage (24) établissant une liaison efficace avec le moteur à combustion (1) et disposant d'un moyeu (29), **caractérisé en ce que** le support d'élément de couplage (27) situé côté entraînement d'entrée du premier dispositif de couplage (24) est disposé de façon fixe sans rotation dans le plan axial tout en effectuant un mouvement de rotation relatif par rapport à l'élément de couplage (61).

7. Agencement d'embrayage selon la revendication 6, **caractérisé en ce que** le support d'élément de couplage (27) situé côté entraînement d'entrée du premier dispositif de couplage (24) loge de façon centrée l'entraînement de sortie (35).

8. Agencement d'embrayage selon la revendication 1, avec un support d'élément de couplage (103) situé côté entraînement de sortie du deuxième dispositif de couplage (54) établissant la liaison efficace avec l'entraînement de sortie (35) et porté par celui-ci, **caractérisé en ce que** le support d'élément de couplage (103) situé côté entraînement de sortie du deuxième dispositif de couplage (54) effectue un mouvement de rotation relatif mais est pour le moins logé de façon centrée fixe sans rotation pour l'essentiel dans le plan axial, du fait de l'élément de couplage (61).

9. Agencement d'embrayage selon la revendication 1, avec un amortisseur d'oscillations de torsion (7) agissant entre le moteur à combustion (1) et l'entraînement de sortie (35), et pouvant être articulé en rotation via un élément de transmission (5) situé côté entraînement d'entrée par rapport à celui-ci contre l'effet d'accumulateurs d'énergie (6), lesdits accumulateurs étant fixés avec leur élément de transmission (5) situé côté entraînement d'entrée à un vilebrequin (2) du moteur à combustion (1) et formant une liaison efficace avec un moyeu d'amortisseur de torsion (20) prévu au niveau d'un élément de transmission (22) situé côté entraînement de sortie via un endentement (21) avec le support d'élément de couplage (27) situé côté entraînement d'entrée du premier dispositif de couplage (24), **caractérisé en ce que** le moyeu d'amortisseur de torsion (20) est fixé à un disque de moyeu (12) de l'élément de transmission (22) situé côté entraînement de sortie à l'aide d'éléments (16) élastiques dans le plan axial.

10. Agencement d'embrayage selon la revendication 9, dans lequel une paroi de séparation (26) est prévue dans le plan axial entre le vilebrequin (2) du moteur à combustion (1) ou l'amortisseur d'oscillation de torsion (7) et le premier dispositif de couplage (24) ainsi que le moteur électrique (44), ladite paroi isolant la chambre de refroidissement (76) du premier dispositif de couplage (24) de façon étanche par rapport à l'espace environnant (30) du vilebrequin (2), **caractérisé en ce que** l'espace environnant (30) entre le vilebrequin (2) ou l'amortisseur d'oscillations de torsion (7) et la paroi de séparation (26) est mesuré de telle sorte dans la direction axiale qu'au moins un arbre (31) d'une chaîne de transmission est logé dans cet espace environnant (30).

11. Agencement d'embrayage selon la revendication 1, **caractérisé en ce que** l'élément de couplage (61) forme aussi bien une paroi de boîtier radiale (53) qu'une paroi de boîtier axiale (55) du deuxième dispositif de couplage (54), de façon à créer un boîtier de couplage (60) entourant les composants de couplage (87) du deuxième dispositif de couplage (54) conjointement avec une autre paroi de boîtier radiale (56) raccordée à la paroi de boîtier axiale (55).

12. Agencement d'embrayage selon la revendication 5, avec un entraînement de sortie (35) prenant la forme d'un arbre d'entrée de boîte de vitesses (36), **caractérisé en ce que** le moyeu de boîtier de couplage (63) entoure un arbre de support (110) du deuxième dispositif de couplage (54) en formant un premier canal (111) de forme annulaire et **en ce que** l'arbre d'entrée de boîte de vitesses (36) entoure l'arbre de support (110) en formant un deuxième canal (112) de forme annulaire.

13. Agencement d'embrayage selon la revendication 12, **caractérisé en ce que** l'arbre d'entrée de boîte de vitesses (36) comporte un alésage central (113) disposant d'une fermeture (114) au niveau de son extrémité située côté entraînement d'entrée.

14. Agencement d'embrayage selon la revendication 11, **caractérisé en ce que** dans le deuxième dispositif de couplage (54), le piston (94) délimite dans le plan axial la chambre de refroidissement (98) conjointement avec la paroi de boîtier radiale (53) associée à l'élément de couplage (61) ainsi que la chambre de pression (97) conjointement avec l'autre paroi de boîtier radiale (56).

15. Agencement d'embrayage selon la revendication 14, **caractérisé en ce que** dans le deuxième dispositif de couplage (54), la paroi de boîtier radiale (53) associée à l'élément de couplage (61) et ainsi la chambre de refroidissement (98) sont situées côté entraînement d'entrée du piston (94), l'autre paroi de boîtier radiale (56) et ainsi la chambre de pression (97) étant situées côté entraînement de sortie.

16. Agencement d'embrayage selon la revendication 14 ou 15, **caractérisé en ce que** l'élément de couplage (61) délimite dans le plan axial la chambre de pression (75) du premier dispositif de couplage (24) avec sa paroi de boîtier radiale (53) conjointement avec le piston (72) associé au premier dispositif de couplage (24).

17. Agencement d'embrayage selon la revendication 16, **caractérisé en ce que** le piston (72) du premier dispositif de couplage (24) délimite dans le plan axial sur un côté la chambre de refroidissement (76) du premier dispositif de couplage (24) conjointement avec la paroi de boîtier radiale (53) située côté entraînement d'entrée du boîtier de couplage (60) et de l'autre côté la paroi de séparation (26).

18. Agencement d'embrayage selon la revendication 1, 16 ou 17, avec au moins un accumulateur d'énergie axial (80 ; 101) associé au piston (72 ; 94) d'un dispositif de couplage (24 ; 54) et agissant lors du débrayage, **caractérisé en ce que** l'accumulateur d'énergie axial (80 ; 101) soutient le processus de débrayage en s'appuyant sur le moyeu (62 ; 63) logeant le piston (72 ; 94) respectif du support d'élément de couplage (50 ; 51) respectif.

19. Agencement d'embrayage selon la revendication 11, 12 ou 18, **caractérisé en ce qu'**une conduite (115) prévue dans un carter de boîte de vitesses (42) situé côté entraînement de sortie du deuxième dispositif de couplage (54) forme la première conduite d'alimentation (120) conjointement avec une conduite (116) réalisée dans le moyeu de boîtier de couplage (63) de la paroi de boîtier radiale (56) située côté entraînement de sortie du deuxième dispositif de couplage (54).

20. Agencement d'embrayage selon la revendication 12, **caractérisé en ce que** le premier canal (111) de forme annulaire s'étendant entre le moyeu de boîtier de couplage (63) et l'arbre de support (110) du deuxième dispositif de couplage (54) sert de deuxième conduite d'alimentation (121).

21. Agencement d'embrayage selon la revendication 12, **caractérisé en ce que** le deuxième canal (112) de forme annulaire s'étendant entre l'arbre de support (110) du deuxième dispositif de couplage (54) et l'arbre d'entrée de boîte de vitesses (36) prend la forme d'une conduite d'évacuation (122) conjointement avec une conduite (123) traversant le moyeu (104) du support d'élément de couplage (103) situé côté entraînement de sortie du deuxième dispositif de couplage (54).

22. Agencement d'embrayage selon la revendication 13, **caractérisé en ce que** l'alésage central (113) de l'arbre d'entrée de boîte de vitesses (36) sert de troisième conduite d'alimentation (126) conjointement avec un raccord radial (124) prévu dans l'arbre d'entrée de boîte de vitesses (36) et une conduite (125) traversant le moyeu d'élément de couplage (62).

23. Agencement d'embrayage selon la revendication 18, **caractérisé en ce qu'**une autre conduite (130) traversant le moyeu d'élément de couplage (62) et reliant la chambre de refroidissement (98) du deuxième dispositif de couplage (54) à la chambre de refroidissement (76) du premier dispositif de couplage (24) sert de conduite de raccordement (131).

24. Agencement d'embrayage selon l'une quelconque des revendications 6, 7, 9 ou 21 à 23, **caractérisé en ce que** le centrage ainsi que la fixation axiale du moyeu d'élément de couplage (62) par rapport à l'arbre d'entrée de boîte de vitesses (36) d'une part et par rapport aux moyeux (29, 63) du support d'élément de couplage (27) situé côté entraînement d'entrée du premier dispositif de couplage (24) ainsi que du support d'élément de couplage (103) situé côté entraînement de sortie du deuxième dispositif de couplage (54) d'autre part se produisent respectivement au moyen de paliers (64, 65, 71).

25. Agencement d'embrayage selon la revendication 12 ou 13 et 24, **caractérisé en ce que** le moyeu (29) du support d'élément de couplage (27) situé côté entraînement d'entrée du premier dispositif de couplage (24) dispose d'un évidement (41) prévu pour centrer l'arbre d'entrée de boîte de vitesses (36).

26. Agencement d'embrayage selon l'une quelconque des revendications 11 ou 14 à 17, **caractérisé en ce que** le premier dispositif de couplage (24) comporte une paroi de boîtier (150) située côté entraînement d'entrée, qui forme un boîtier de couplage (154) du premier dispositif de couplage (24) conjointement avec une paroi de boîtier axiale (152) située à l'extérieur dans le plan radial et fixe sans rotation par rapport au premier support d'élément de couplage (50) situé côté entraînement d'entrée et avec la paroi de boîtier radiale (53) située côté entraînement d'entrée.

27. Agencement d'embrayage selon la revendication 26, **caractérisé en ce que** la paroi de boîtier (150) située côté entraînement d'entrée du premier dispositif de couplage (24) comporte au moins un passage (156) à travers lequel la chambre de refroidissement (76) du premier dispositif de couplage (24) peut être déplacée avec la voie d'évacuation (144) dans le raccord d'écoulement.

28. Agencement d'embrayage selon la revendication 27**, caractérisé en ce que** le passage est prévu dans la paroi de boîtier (150) située côté entraînement d'entrée du premier dispositif de couplage (24) de façon à pouvoir se déplacer vers l'intérieur sur une certaine distance radiale (158) prédéfinie par rapport à la paroi de boîtier axiale (152) de ce dispositif de couplage (24).

29. Agencement d'embrayage selon la revendication 22, **caractérisé en ce que** le moyeu (104) du deuxième support d'élément de couplage (103) situé côté entraînement de sortie est pourvu d'une conduite (123) pour agent liquide.
